# EUROPÄISCHE PATENTSCHRIFT

(11) **EP 1 147 028 B1**
(45) Veröffentlichungstag und Bekanntmachung des Hinweises auf die Patenterteilung: **06.10.2004**
(21) Anmeldenummer: 00983037.3
(22) Anmeldetag: 19.10.2000
(51) Int. Cl.: B60N 2/02, B60N 2/22

(54) **EINRICHTUNG ZUR VERSTELLUNG EINER SITZLEHNE MIT LASTKOMPENSATION**
LOAD COMPENSATING DEVICE FOR ADJUSTING A SEAT REST
DISPOSITIF POUR REGLER UN DOSSIER DE SIEGE, A COMPENSATION DE CHARGE

(30) Priorität: 03.11.1999 DE 19952963
(43) Veröffentlichungstag der Anmeldung: 24.10.2001
(73) Patentinhaber: ROBERT BOSCH GMBH, 70442 Stuttgart (DE)
(72) Erfinder: URSEL, Eckard, 77815 Buehl (DE); GENTER, Gerhard, 77855 Achern (DE); WINTER, Manfred, 77839 Lichtenau (DE); HAUSSECKER, Walter, 77830 Buehlertal (DE); SCHILLER, Herbert, 77830 Buehlertal (DE); MAENNLE, Erik, 77704 Oberkirch (DE); HARTZ, Guenter, 77830 Bühlertal (DE); WOLF, Joerg, 76139 Karlsruhe (DE); PROHASKA, Werner, 77833 Ottersweier (DE); STEUER, Martin, 77830 Buehlertal (DE); LINDE, Hansjuergen, 96450 Coburg (DE); NEUMANN, Uwe, 96050 Bamberg (DE); REHKLAU, Andreas, 96450 Coburg (DE)
(86) Internationale Anmeldenummer: PCT/DE2000/003672
(87) Internationale Veröffentlichungsnummer: WO 2001/032462

(56) Entgegenhaltungen:
- EP-A- 0 099 414
- DE-A- 3 900 219
- DE-A- 19 648 974
- FR-A- 2 677 935

## Beschreibung

### Technisches Gebiet:

Fahrzeugsitze werden in zunehmendem Maße mit elektrischen Stellantrieben versehen, um den Fahrzeuginsassen ein ergonomisches und bequemes Sitzen im Fahrzeug zu ermöglichen und den Insassen ein individuelles Anpassen der jeweiligen Sitzposition zu ermöglichen. Die Einstellung der Sitzlehne erfolgt üblicherweise über in die Lehnenbeschläge integrierte Taumelgetriebe.

### Stand der Technik:

Bei bisher bekannten elektrischen Sitzlehnenverstellungen (z.B. gemäß Oberbegriff das Anspruchs 1) erfolgt der Antrieb der Verstellgetriebe über Elektromotoren, die auf Taumelgetriebe einwirken. Während bei den elektrischen Verfahrantrieben das Verfahren des Sitzes in einer horizontal orientierten Ebene verläuft und sich der Moment- und Kraftverlauf kontinuierlich ändert, geht eine Lehnenverstellung an einem Fahrzeugsitz mit einem diskontinuierlichen Momentenverlauf einher. Das Oberkörpergewicht der Person, die die Lehnenverstellung vornimmt, wirkt auf die zu verstellende Sitzlehne ein und erzeugt antriebsseitig, je nach Grad der Sitzlehnenneigung für den Antriebsmotor einen diskontinuierlichen Momentenverlauf, insbesondere unter Last. Dies macht sich einerseits je nach Verstellposition der Sitzlehne durch eine ungleichförmige Motordrehzahl und andererseits durch ein ungleichförmiges Geräuschbild des Antriebsmotors bemerkbar.

### Darstellung der Erfindung :

Die Erfindung ist durch die Merkmale des unabhängigen Anspruchs 1 definiert; weitere Merkmale der Erfindung beinhalten die abhängigen Ansprüche.

Mit der gewählten Einbauposition des Torsionselementes kann dieses einerseits zum Spielausgleich innerhalb der die Sitzlehne verstellenden Taumelgetriebe beiderseits der Sitzfläche benutzt werden; andererseits ist durch die Abwärtsbewegung der Sitzlehne eine Vorspannung des Torsionselementes möglich. Wird die Sitzlehne nun wieder in Richtung der Vertikalen aufwärtsbewegt, unterstützt der Energiespeicher Torsionsfeder durch seine Entspannung die Aufwärtsbewegung der Sitzlehne durch den Antriebsmotor.

Besonders vorteilhaft ist es, eine die beiden Taumelgetriebe verbindende Übertragungswelle als Hohlwelle auszubilden, von der das Torsionselement umschlossen werden kann. Je größer der innere Durchmesser der Hohlwelle gewählt werden kann, desto stärker in ihrem Durchmesser dimensionierte Torsionselemente können verwendet werden. Je größer der Durchmesser der als Torsionselemente beispielsweise verwendbaren Torsionsstäbe bemessen werden kann, desto stärker ist die unterstützende Wirkung der Torsionselemente für den Antrieb beim Aufwärtsbewegen der unter Last stehenden Sitzlehne.

Mittels der erfindungsgemäß vorgeschlagenen Lösung läßt sich das Spiel in den die Verstellbewegung der Sitzlehne herbeiführenden Taumelgetrieben kompensieren. Dies ermöglicht eine gleichmäßig ablaufende, ruckelfreie stetige Verstellbewegung, ohne daß eine Entlastung der Sitzlehne erfolgen müßte. Als Verdrehsicherung des die Übertragungswelle zwischen den Taumelgetrieben durchsetzenden Torsionsstabes läßt sich ein Vierkantansatz des Torsionselementes formschlüssig in einem den Vierkantansatz umschließenden Widerlager einbetten. Das Torsionselement kann platzsparend im Innem einer als Hohlwelle ausgeführten Übertragungswelle zwischen den Taumelgetrieben aufgenommen werden; die Konfiguration der Lehnenbeschläge, der Lagerungen der Taumelgetriebe bedarf keiner Modifikationen; es lassen sich nach dem Baukastenprinzip weitestgehend Gleichteile verwenden.

### Zeichnungen:

Anhand der Zeichnungen wird die Erfindung nachstehend näher erläutert.

Es zeigt:
- Figur 1: die Verstellbereiche einer mittels eines elektrischen Antriebsmotors betätigbaren Sitzlehne,
- Figur 2: die Drehmomentverläufe für unterschiedliche Lastfälle, aufgetragen über dem Sitzlehnenwinkel,
- Figur 3: die Vorderansicht eines Fahrzeugsitzes mit sich zwischen den Taumelgetrieben erstreckender Übertragungswelle,
- Figur 4: das Widerlager eines eine Hohlwelle durchsetzenden Torsionselementes und
- Figur 5: die Seitenansicht eines Fahrzeugsitzbeschlages im Bereich der Sitzlehne.

### Ausführungsvarianten:

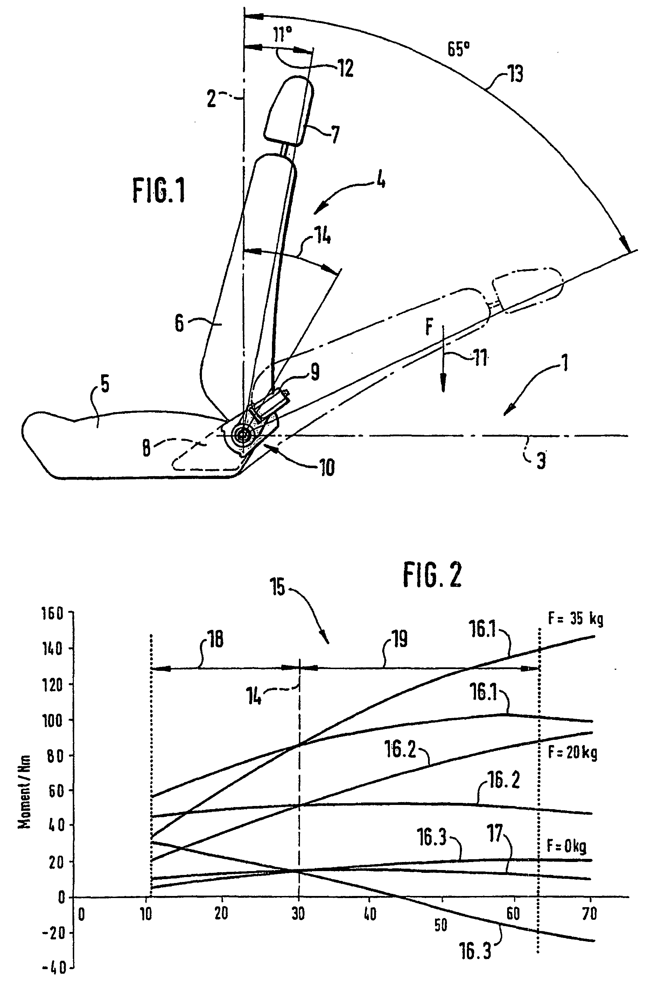

Fig. 1 zeigt die Verstellbereiche einer Sitzlehne eines elektrisch betätigbaren Fahrzeugsitzes.

Anhand eines Bezugssystems 1, eine Vertikale 2 sowie eine Horizontale 3 umfassend, lassen sich die Neigungsbereiche einer Sitzlehne 6 eingrenzen. Im Normalzustand ist die Sitzlehne 6 eines Fahrzeugsitzes 4 um etwa 11°, gekennzeichnet mit Bezugszeichen 12, geneigt. Bei heutigen Fahrzeugsitzen 4 ist am Oberteil der Sitzlehne 6 eine Kopfstütze 7 aufgenommen, die nach Statur des Fahrzeuginsassen in vertikaler Richtung verschiebbar ist. Seitlich einer Sitzfläche 5 des Fahrzeugsitzes 4 sind auf beiden Sitzseiten einander gegenüberliegende Beschläge 8 vorgesehen, die die relativ zur Sitzfläche 5 neigbarer Sitzlehne 6 aufnehmen und deren Verstellantrieben 9, 10 beherbergen. Als Verstellantrieb kann beispielsweise ein Elektromotor in das Innere des Fahrzeugsitzes 4 integriert sein, welcher auf ein Taumelgetriebe 10 einwirkt, welches die Sitzlehne 6 in verschiedenen Neigungspositionen in Bezug auf die Vertikale 2 verstellt.

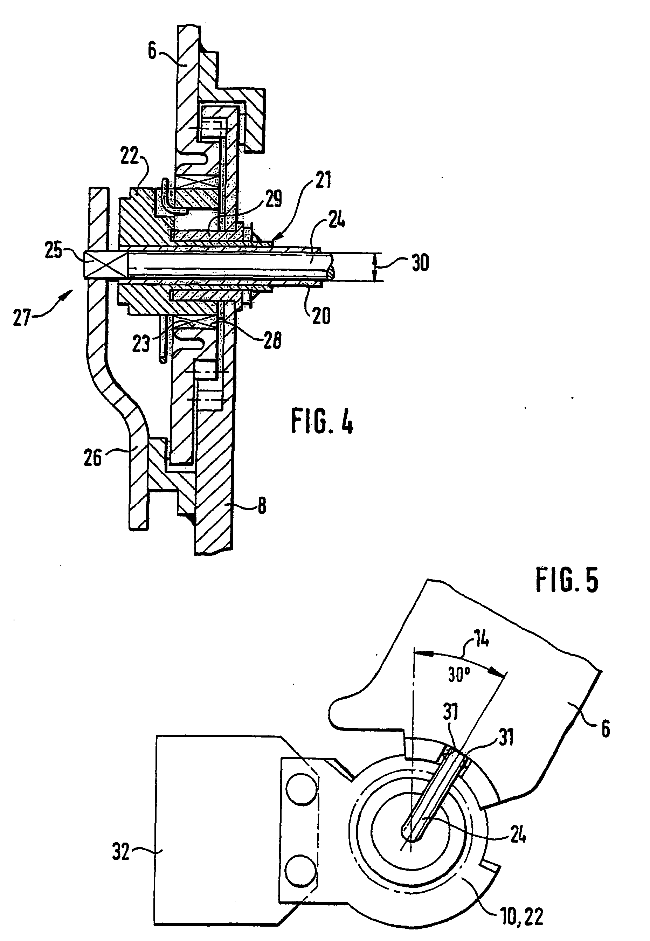

Die Normalposition der Sitzlehne 6 in Bezug auf die Vertikale 2 ist mit Bezugszeichen 12 bezeichnet und besteht in einer Lehnenneigung in Bezug auf die Vertikale 2 um etwa 10°, im Ausführungsbeispiel 11°. Der im Ausführungsbeispiel mit 65° angegebene maximale Neigungswinkel der Sitzlehne 6 in Bezug auf die Vertikale 2 kann größer bemessen oder auch kleiner bemessen sein, je nach Anordnung der Sitzbank oder der Einzelsitze im Fond eines Fahrzeuges. Mit Bezugszeichen 14 ist die Montageposition eines Torsionselementes 24 (vgl. Fig. 4) bezeichnet, welches bezogen auf die Vertikale 2 um einen Winkel von etwa 30° verdreht eingebaut ist.

Mit Bezugszeichen 11 ist die Last bezeichnet, mit welcher die Sitzlehne 6 beaufschlagt ist, die dem Gewicht des Oberkörpers des Fahrzeuginsassens entspricht und den die Sitzlehne 6 verstellenden Antrieb 9 mit einem ungleichförmigen - entsprechend der Aufwärtsbewegung der Sitzlehne 6-verlaufenden Moment beaufschlagt.

In Fig. 2 sind Drehmomentenverläufe dargestellt, die verschiedenen Lastzuständen entsprechen, aufgetragen über dem Neigungswinkel der Sitzlehne 6.

Im Falle des Kennlinienverlaufes 16.1 wird eine Last 11 (F = 35 kg) auf die Sitzlehne 6 aufgebracht. Gemäß des Kennlinienpaares 16.1, von denen die obere den Momentenverlauf, die untere den Durchmesser des entsprechenden Torsionselementes 24 wiedergibt, ergeben sich beidseits der 30°-Winkelmarke für den Lehnenneigungswinkel zwei Bereiche. Die beiden Bereiche 18 und 19 erstrecken sich beiderseits der Montageposition 14, die die um 30° verdrehtorientierte Einbauposition des Torsionselementes 24 wiedergibt Innerhalb des ersten Verstellbereiches 18, der sich von 10° Lehnenneigungswinkel bis zur 30°-Winkelmarke der Montageposition 14 erstreckt, drückt das in diesen Bereich vorgespannte Torsionselement 24 durch Fertigungstoleranzen bedingtes Spiel der Verzahnungen innerhalb der Taumelgetriebe 10 heraus, so daß diese spielfrei verstellbar sind. Dies ist durch die um 30° in Bezug auf die Vertikale 2 verdrehte Montageposition 14 des Torsionselementes 24 möglich.

Im sich zwischen der 30°-Winkelmarke und dem Ende des weiteren Verstellbereiches 19 bis etwa 65° Lehnenneigungswinkel erstreckenden Bereich, dient das Torsionselement 24 als Unterstützung für den Verstellantrieb 9 (vgl. Fig. 1). Durch Neigen der Sitzlehne 6 bis auf die 65°-Neigungsposition erfährt das erfindungsgemäß vorgeschlagene Torsionselement 24 eine Vorspannung durch Verdrillung und unterstützt den Antrieb 6 der Sitzlehne 6 beim sich anschließenden Wiederaufwärtsbewegen der Sitzlehne 6 in ihre normale Position 12 durch schrittweises Zurückführen der Vorspannung.

Analog zum Kurvenverlauf 16.1 verhält es sich bei den in Fig. 2 ebenfalls dargestellten Kennlinienverläufen 16.2 und 16.3 für mittlere bzw. geringe Lasten. Bezogen auf die Montageposition 14 des Torsionselementes 24, gekennzeichnet durch die 30°-Lehnenneigungsposition, erstrecken sich der Vorspannbereich 19 zwischen der 10° und der 30°-Lehnenneigungsmarke, während sich der den Antriebsmotor 9 bei einer Aufwärtsbewegung der Sitzlehne 6 unterstützende weitere Verstellbereich 19 zwischen der 30° und der 65°-Winkelmarke gemäß Fig. 2 erstreckt. Die jeweils unteren Kennlinien der Kennlinienverläufe 16.1, 16.2 und 16.3 stellen die Momentenverläufe für Torsionselemente von 8 mm Durchmesser dar. Mit dem Kennlinienverlauf 17 ist die Kennlinie eines Torsionselementes 24 gekennzeichnet, welches einen geringeren Durchmesser aufweist, etwa 6 mm gegenüber 8 mm, entsprechend der Kennlinienverläufe 16.1, 16.2 und 16.3.

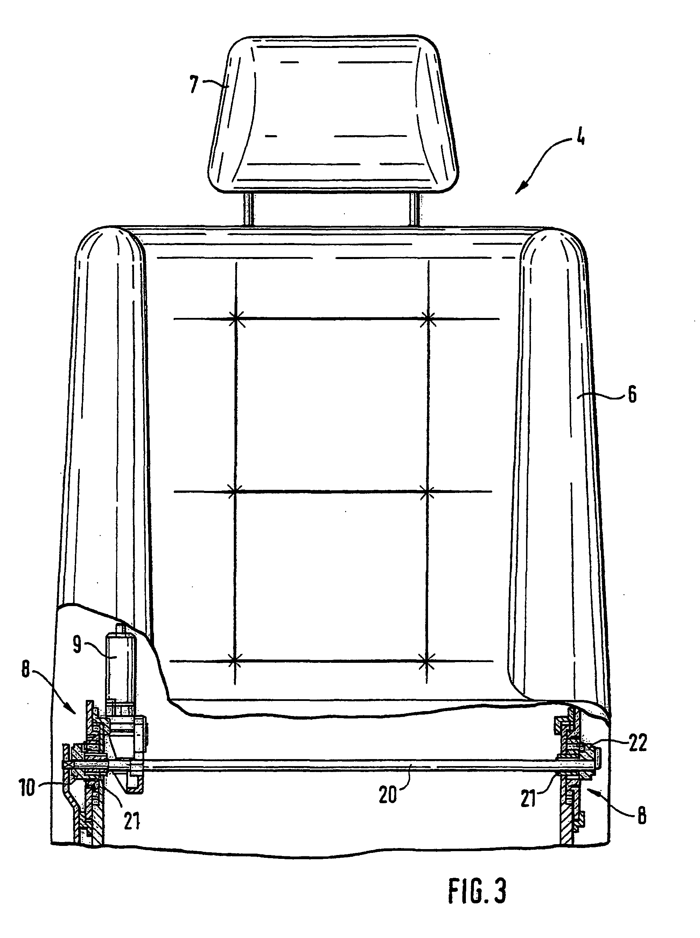

Fig. 3 zeigt die Vorderansicht eines Fahrzeugsitzes mit sich zwischen den Taumelgetrieben erstreckender Übertragungswelle.

Im Inneren des Fahrzeugsitzes 4 befindet sich der Verstellantrieb 9, sowie die beiden Taumelgetriebe 10, 22 miteinander verbindende Übertragungswelle 20. Jedes der Taumelgetriebe 10, 22 ist seitlich an der Sitzfläche des Fahrzeugsitzes 4 untergebracht. Die Übertragungswelle 20 kann bevorzugt als Hohlwelle ausgeführt sein mit möglichst groß dimensioniertem inneren Durchmesser 30. Je nach Dimensionierung des inneren Durchmessers 30 der Übertragungswelle 20, können größer dimensionierte Torsionsstäbe 24 als Torsionselemente in die Hohlwelle eingelassen werden. Die die Sitzlehne 6 mit den seitlichen Beschlägen 8 verbindenden Taumelgetrieben 10, 22 sind über die Hohlwelle 20 miteinander verbunden; lediglich einem der Taumelgetriebe 10, 22, auf einer Seite des Fahrzeugsitzes 4 ist ein elektromotorischer Antrieb 9 zugeordnet. An den Beschlägen 8 befinden sich jeweils Wellenlager 21, die die Übertragungswelle 20 drehbar aufnehmen.

Fig. 4 zeigt die Anordnung eines der Taumelgetriebe an einer Seite des Fahrzeugsitzes.
Die als Hohlwelle ausgebildete Übertragungswelle 20 nimmt ein entsprechend ihres inneren Durchmessers 30 dimensioniertes Torsionselement 24 auf. Dieses ist mit einem als Widerlager dienenden Vierkantansatz 25 versehen. Anstelle eines Vierkantansatzes 25, der hier dargestellt ist, lassen sich auch andere Widerlager, wie Mehrkeilprofile, einen Formschluß herbeiführende Widerlagerausführungen denken. Im dargestellten Ausführungsbeispiel gemäß Fig. 4 ist ein Ende des Torsionsstabes 24 als Vierkantansatz 25 ausgebildet und von einem Widerlager 26 umschlossen, womit das Torsionselement 24 in seiner Position fixiert ist. Die Position des Torsionselementes 24 entspricht seiner bereits vorstehend erwähnten um 30° in Bezug auf die Vertikale 2 verdrehten Montageposition 14. Ein Ende des Widerlagers 26 ist beispielsweise zur Momentenabstützung mit dem Beschlag 8 verbunden. Das Widerlager 26 fungiert als Verdrehsicherung 27 des Torsionselementes 24, das sich durch die Übertragungswelle 20 erstreckt.

Die als Hohlwelle ausgebildete Übertragungswelle 20 wird von einer Hülse 29 umschlossen, die ihrerseits im Beschlag 8 aufgenommen ist. Auf der Außenseite dieser Übertragungswelle 20 befindet sich ein Taumelgetriebe 22, das in Wälzlagern 28 in der Bohrung 23 der verstellbaren Sitzlehne 6 aufgenommen ist und eine Relativverstellung zwischen dem Beschlag 8 und der Sitzlehne 6 erlaubt. Neben der dargestellten Verdrehsicherung 27 lassen sich selbstverständlich auch andere Verdrehsicherungen vorstellen, mit welchen das die Hohlwelle 20 durchsetzende Torsionselement 24 in seiner Montageposition 14, verdreht um 30° in Bezug auf die Vertikale 2, gehalten werden kann. Die dargestellte Ausführungsvariante ist als ein Beispiel unter vielen möglichen Varianten anzusehen.

Fig. 5 schließlich zeigt den Verbindungsbereich der in Bezug auf den Korpus 22 des Fahrzeugsitzes 4 verstellbaren Sitzlehne 6.

Die Montageposition 14 eines als Torsionselement 24 dienenden L-förmigen Torsionsstabes kann beispielsweise dadurch festgelegt werden, daß das abgewinkelte Ende des Torsionselementes 24 zwischen zwei Anschlägen 31 an der Sitzlehne 6 eines Fahrzeugsitzes 4 in einem Winkel von etwa 30° festgelegt wird. Dadurch läßt sich die Verdrehlage des stabförmigen Torsionselementes 24 an einer Seite des Fahrzeugsitzes 4 genau vorgeben, während das Torsionselement 24 auf der gegenüberliegenden Seite des Fahrzeugsitzes 4 gegen Verdrehung gesichert wird. Je stärker die Torsionselemente 24 dimensioniert werden können, desto größer kann die von ihnen erbrachte Unterstützung des Antriebes 9 bei der Aufwärtsbewegung einer in einer abwärts bewegten Sitzlehne 6 sein, ein umso gleichmäßigeres Geräuschbild des Antriebsmotors 9 läßt sich erzielen.

### Bezugszeichenliste

- 1: Bezugssystem
- 2: Vertikale
- 3: Horizontale
- 4: Fahrzeugsitz
- 5: Sitzfläche
- 6: Sitzlehne
- 7: Kopfstütze
- 8: Beschlag
- 9: Antriebsmotor
- 10: Taumelgetriebe
- 11: Last
- 12: Normalneigung
- 13: maximaler Neigungsbereich
- 14: Montageposition
- 15: Momenten-/Neigungswinkelverlauf
- 16.1: hohe Last
- 16.2: mittlere Last
- 16.3: geringe Last
- 17: Durchmesser Federelement
- 18: Vorspannbereich
- 19: Unterstützungsbereich
- 20: Hohlwelle
- 21: Wellenlager
- 22: Taumelgetriebe
- 23: Bohrung
- 24: Torsionsstab /Torsionselement
- 25: Vierkantansatz
- 26: Widerlager
- 27: Verdrehsicherung
- 28: Taumelgetriebelager
- 29: Hülse
- 30: Innendurchmesser Hohlwelle
- 31: Anschlag
- 32: Korpus

## Patentansprüche

1. Einrichtung zur Verstellung einer Sitzlehne (6) eines Fahrzeugsitzes (4), in welchen ein Verstellvorgänge ausführender Antrieb (9) integriert ist, der auf Taumelgetriebe (10, 22) einwirkt, welche die Sitzlehne (6) innerhalb eines Neigungsbereiches (13) bewegen, **dadurch gekennzeichnet, daß** im Drehpunkt der Taumelgetriebe (10, 22) ein Torsionselement (24) vorgesehen ist, welches innerhalb eines ersten Verstellbereiches (18) Spiel in den Taumelgetrieben (10, 22) kompensiert und innerhalb eines weiteren Verstellbereiches (19) als Unterstützung für den Antriebsmotor (9) wirkt.

2. Einrichtung gemäß Anspruch 1, **dadurch gekennzeichnet, daß** das Torsionselement (24) in seiner Montageposition (14) bezogen auf die Sitzlehne (6) spannungsfrei ist.

3. Einrichtung gemäß Anspruch 2, **dadurch gekennzeichnet, daß** das Torsionselement (24) in seiner Montageposition (14) um etwa 30° bezogen auf die Vertikale (2) orientiert und spannungsfrei ist.

4. Einrichtung gemäß Anspruch 1, **dadurch gekennzeichnet, daß** das Torsionselement (24) von einer die Taumelgetriebe (10, 22) verbindenden Hohlwelle (20) umschlossen ist.

5. Einrichtung gemäß Anspruch 2, **dadurch gekennzeichnet, daß** in der Montageposition (14) ein L-förmiger Fortsatz des Torsionselementes (24) von zwei Anschlägen (31) an der Sitzlehne (6) umschlossen ist.

6. Einrichtung gemäß Anspruch 1, **dadurch gekennzeichnet, daß** der erste Verstellbereich (18) des Torsionselementes (24) sich von etwa 10° bis ca. 30° Neigung der Sitzlehne (6) bezogen auf die Vertikale (2) erstreckt.

7. Einrichtung gemäß Anspruch 1, **dadurch gekennzeichnet, daß** der weitere Verstellbereich (19) des Torsionselementes (24) sich von 30° bis ca. 65° Neigung der Sitzlehne (6) bezogen auf die Vertikale (2) erstreckt.

8. Einrichtung gemäß Anspruch 1, **dadurch gekennzeichnet, daß** die spannungsfreie Montagepositon (14) zwischen dem ersten Verstellbereich (18) und dem weiteren Verstellbereich (19) liegt.

9. Einrichtung gemäß Anspruch 1, **dadurch gekennzeichnet, daß** die unterstützende Wirkung des Torsionselementes (24) bei der Aufwärtsbewegung der Sitzlehne (6) mit zunehmendem Durchmesser des Torsionselementes (24) ansteigt.

## Claims

1. Device for adjusting a seat back (6) of a vehicle seat (4) containing a drive (9) which carries out adjustment processes and acts on wobble mechanisms (10, 22) which move the seat back (6) within a range of inclination (13), **characterized in that** a torsion element (24) is provided in the pivot point of the wobble mechanisms (10, 22) and, within a first region of adjustment (18), compensates for play in the wobble mechanisms (10, 22) and, within a further region of adjustment (19), acts as support for the driving motor (9).

2. Device according to Claim 1, **characterized in that** in its installation position (14) the torsion element (24) is stress-free with respect to the seat back (6).

3. Device according to Claim 2, **characterized in that** in its installation position (14) the torsion element (24) is orientated through approximately 30° with respect to the vertical (2) and is stress-free.

4. Device according to Claim 1, **characterized in that** the torsion element (24) is surrounded by a hollow shaft (20) connecting the wobble mechanisms (10, 22).

5. Device according to Claim 2, **characterized in that** in the installation position (14) an L-shaped extension of the torsion element (24) is surrounded by two stops (31) on the seat back (6).

6. Device according to Claim 1, **characterized in that** the first region of adjustment (18) of the torsion element (24) extends from approximately 10° to approximately 30° of the inclination of the seat back (6) with respect to the vertical (2).

7. Device according to Claim 1, **characterized in that** the further region of adjustment (19) of the torsion element (24) extends from 30° to approximately 65° of the inclination of the seat back (6) with respect to the vertical (2).

8. Device according to Claim 1, **characterized in that** the stress-free installation position (14) is situated between the first region of adjustment (18) and the further region of adjustment (19).

9. Device according to Claim 1, **characterized in that** the supporting effect of the torsion element (24) increases with increasing diameter of the torsion element (24) during the upwards movement of the seat back (6).

## Revendications

1. Dispositif de réglage d'un dossier de siège (6) d'un siège de véhicule (4), dans lequel est intégré un entraînement (9) exécutant des opérations de réglage et qui agit sur des engrenages (10, 22) déplaçant le dossier de siège (6) à l'intérieur d'une zone d'inclinaison (13),
**caractérisé en ce que**
au niveau de l'articulation des engrenages (10, 22), il est prévu un élément de torsion (24) qui compense le jeu dans les engrenages (10, 22) à l'intérieur d'une première zone de réglage (18), et agit comme soutien pour le moteur d'entraînement (9) à l'intérieur d'une autre zone de réglage (19).

2. Dispositif selon la revendication 1,
**caractérisé en ce que**
l'élément de torsion (24) est dans sa position de montage (14) exempt de contraintes par rapport au dossier de siège (6).

3. Dispositif selon la revendication 2,
**caractérisé en ce que**
l'élément de torsion (24) est orienté dans sa position de montage (14) d'environ 30° par rapport à la verticale (2) et est exempt de contraintes.

4. Dispositif selon la revendication 1,
**caractérisé en ce que**
l'élément de torsion (24) est entouré par un arbre creux (20) reliant les engrenages (10, 22).

5. Dispositif selon la revendication 2,
**caractérisé en ce que**
dans la position de montage (14), un prolongement de l'élément de torsion (24) en forme de L est entouré par deux butées (31) sur le dossier de siège (6).

6. Dispositif selon la revendication 1,
**caractérisé en ce que**
la première zone de réglage (18) de l'élément de torsion (24) s'étend selon une inclinaison du dossier de siège (6) d'environ 10° à environ 30° par rapport à la verticale (2).

7. Dispositif selon la revendication 1,
**caractérisé en ce que**
l'autre zone de réglage (19) de l'élément de torsion (24) s'étend selon une inclinaison du dossier de siège (6) d'environ 30° à environ 65° par rapport à la verticale (2).

8. Dispositif selon la revendication 1,
**caractérisé en ce que**
la position de montage (14) exempte de contraintes se situe entre la première zone de réglage (18) et l'autre zone de réglage (19).

9. Dispositif selon la revendication 1,
**caractérisé en ce que**
l'effet de soutien de l'élément de torsion (24) augmente avec un diamètre croissant de l'élément de torsion (24) lors du déplacement vers le haut du dossier de siège (6).
